# DEMANDE DE BREVET EUROPEEN

(11) **EP 1 346 633 A2**
(43) Date de publication de la demande: **24.09.2003**
(21) Numéro de dépôt: 03356048.3
(22) Date de dépôt: 18.03.2003
(51) Int. Cl.: A01K 1/01

(54) **Dispositif pour collecter les déjections animales**

(30) Priorité: 18.03.2002 FR 0203335; 20.06.2002 FR 0207673
(71) Demandeur: Pathoux, Roger, 69730 Genay (FR)
(72) Inventeur: Pathoux, Roger, 69730 Genay (FR)
(74) Mandataire: Maureau, Philippe

(57) **Abrégé**

La présente invention concerne un dispositif permettant l'accès à un réseau d'assainissement privé ou public par trappe mobile sous toutes ces formes. Le dispositif de la présente invention permet l'évacuation vers les égouts des déjections des animaux vivant en milieu urbain, publics et privés.

Le dispositif est constitué de trois ensembles, d'une plaque d'égout pour évacuer les déjections, d'une canne pour les ramasser, et d'un support pour nettoyer et désinfecter la canne. Ce support contient aussi un distributeur d'aliment pour animaux domestiques.

## Description

La présente invention concerne un dispositif permettant l'accès à un réseau d'assainissement privé ou public par trappe mobile sous toutes ses formes. Le dispositif de la présente invention permet l'évacuation vers les égouts des déjections des animaux vivant en milieu urbain, publics et privés.

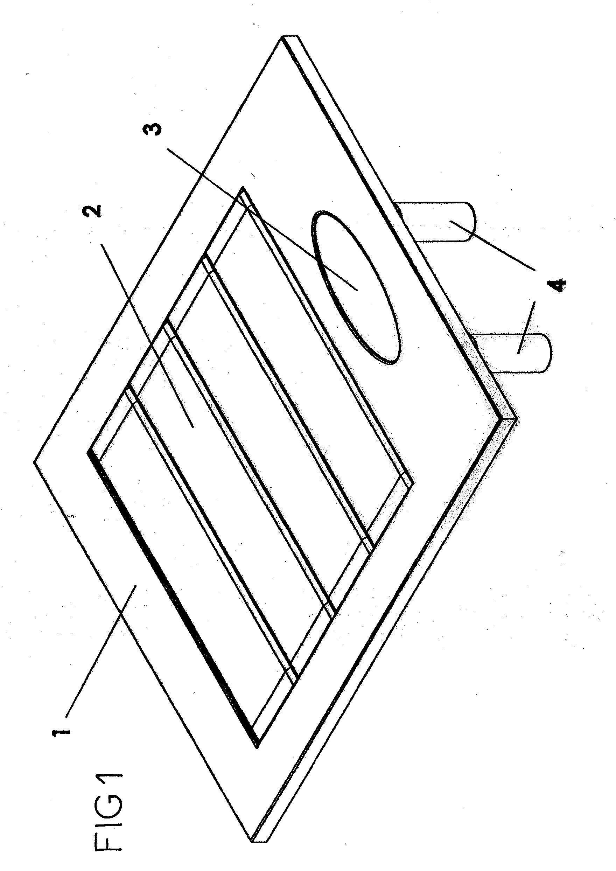

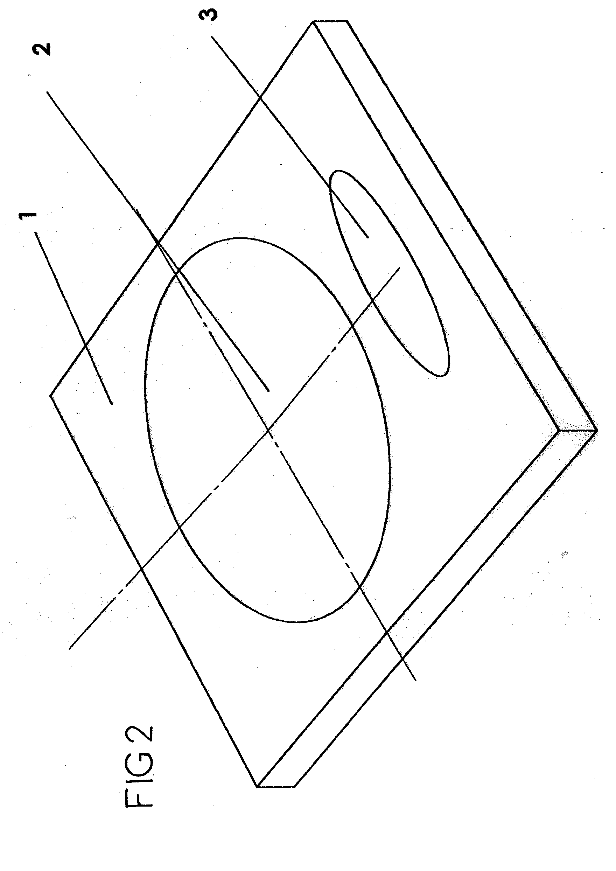

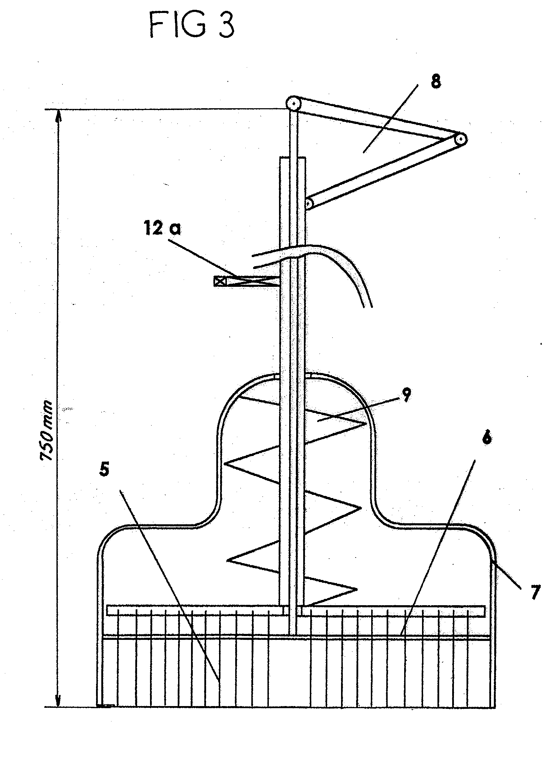

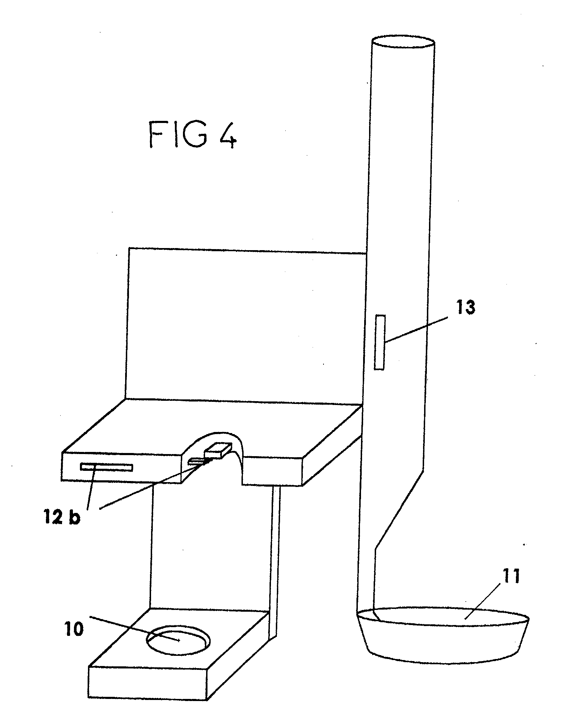

Le dispositif selon l'invention est constitué de trois ensembles destinés à pouvoir coopérer.
- L'ensemble 1 est une plaque d'égout spécifique positionnée en lieu et place d'une plaque déjà existante ou à venir. Cette plaque peut être installée en lieu et place de matériel urbain ou privé (figures 1 et 2).
- L'ensemble 2 est une canne de ramassage des déjections des animaux vivant en milieu urbain (figure 3).
- L'ensemble 3 est le support de la canne mentionnée ci-dessus, et intégrant un dispositif de nettoyage et d'entretien, ainsi qu'un distributeur d'aliment pour animaux vivant en milieu urbain (figure 4).

Le nettoyage des voies de passage est traditionnellement effectué par balayage et jets d'eau sous pression. Dans certaines grandes villes, des véhicules motorisés, adaptés à ce type d'entretien sont utilisés par des employés municipaux et/ou des sociétés sous-traitantes. Ces inconvénients sont augmentés dans la sphère privée et fortement aggravés par l'aspect hygiénique.

Le coût global est une charge importante pour la collectivité.

Le dispositif, selon l'invention, permet de remédier à ces inconvénients et de limiter le nettoyage aux seules bouches à égout équipées du système.

Les antériorités en matière de brevet identifiées à la date du dépôt de brevet de la présente invention sont:
- Pour la globalité de la présente invention (Ensemble 1, 2, et 3):
   N° de dépôt WOHU0000036, du 20.04.2000, avec priorité N° HUU9900096, du 23.04.1999:
- Pour l'ensemble 1:
   N° de dépôt WOUS9923584 du 07.10.1999, avec priorité N°US09/168,033, du 07.10.1998 : Station portative pour déjections canines
- Pour l'ensemble 2:
   N° de dépôt FR0006496 du 22.05.2000: Dispositif de recueil des déjections fécales canines, dans des conditions de confort et d'hygiène maximales, avec respect de l'environnement.
   N° de dépôt FR0013827 du 27.10.2000, avec priorité N° BROO8001 130, du 05.06.2000: Dispositif pour recueillir les excréments canins.
   N° de dépôt EP99109839.3 du 19.05.1999, avec priorité N° FI 980633, du 20.03.1998 : Dispositif en forme de boite pour collecter les excréments canins en milieu urbain.
   N° de dépôt EP99906295.3 du 04.03.1999, avec priorité N° FI 980633, du 20.03.1998 : Dispositif jetable pour ramasser du sol des matières dispersées, telles que les déjections canines.
   N° de dépôt WOES0000158 du 28.04.2000, avec priorité N° ESU9901115, du 30.04.1999 : Dispositif de conduite de chiens et de collecte de leurs excréments.
   N° de dépôt EPOO1 15356.8, du 15.07.2000, avec priorité N° DE19933361, du 16.07.1999: Dispositif servant à recevoir les excréments des animaux domestiques.
   N° de dépôt FR0008100 du 23.06.2000 : Procédé et dispositif pour le ramassage de souillures, en particulier de déjections canines.

La plaque d'égout selon l'invention est positionnée au droit des regards (dénommés aussi tabourets de voirie) des égouts. Cette plaque peut être installée sur les trajets existants ou en création du réseau d'assainissement public. Les regards permettent des interventions techniques dans les canalisations privées des habitations, mais aussi dans celles de la collectivité.

En général d'un diamètre de 150 à 250 mm, ces canalisations servent à l'évacuation des eaux usées de l'habitation. Ces mêmes eaux, dans le dispositif selon l'invention, servent de moyens de transport des déjections des animaux vivant en milieu domestique, à l'identique de la chasse d'eau des toilettes d'une habitation.

La plaque d'égout selon l'invention, est positionnée au sol. Elle est constituée d'une plaque en tout type de matériau résistant 1 (figures 1 et 2), dans laquelle pivotent une ou plusieurs palles 2, (dénommées aussi palettes).

Ces palles au revêtement de surface lisse jouent le rôle de couvercle. Elles se chevauchent les unes sur les autres afin d'accroître la résistance aux charges lourdes (essieu de véhicule par exemple). La ou les palles, en pivotant, donnent accès au réseau d'assainissement, et permettent ainsi aux déjections des animaux vivant en milieu domestique de tomber dans les égouts. La plaque objet de la présente invention est conforme à la norme EN 124 de novembre 1994, relative aux « Dispositifs de couronnement et de fermeture pour les zones de circulation utilisées par les piétons et les véhicules ― Principes de construction, essais types, marquage, contrôle de qualité ».

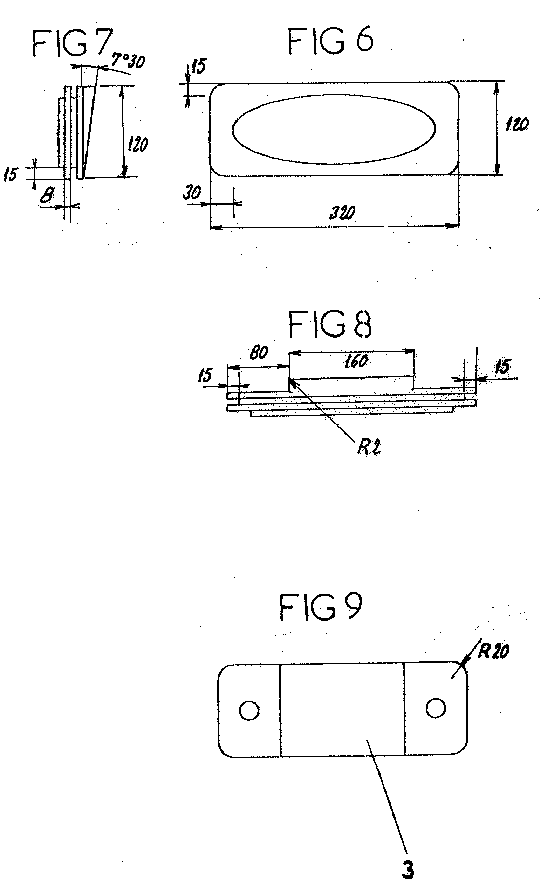

Pour que les palles s'ouvrent, un mécanisme de commande est actionné par appui avec le pied sur le bouton de commande 3 (figures 1 et 6 à 9). L'effort exercé est suffisamment important pour qu'un enfant ne puisse pas faire fonctionner le mécanisme seul. Cet effort de 25 DaN est obtenu par un ou des vérins à gaz 4 (ou d'autres moyens techniques).

Ce mécanisme d'ouverture intègre aussi, toujours pour l'aspect sécuritaire, une ouverture non immédiate, de l'ordre de une à deux secondes. Cet effet retardé est obtenu grâce au(x) vérin(s) à gaz 4 (ou d'autres moyens techniques). Entre le bouton de commande et le cadre, un joint assure l'étanchéité, et la protection du mécanisme d'ouverture.

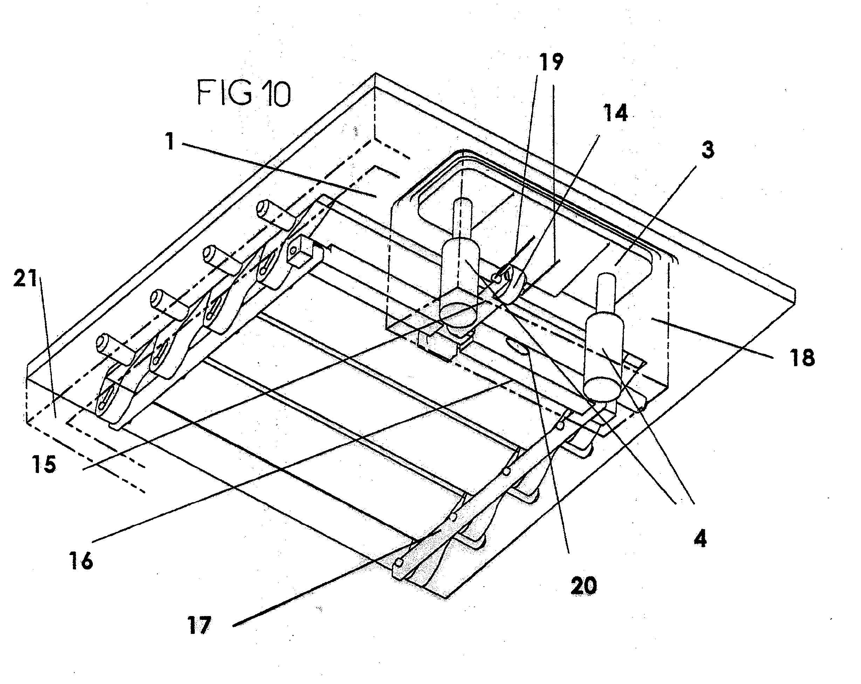

Le bouton de commande 3, en sa partie inférieure est constitué d'un plan incliné de 7,3 degrés sur lequel roule un galet 14 (figure 10). Lors de sa descente, le bouton de commande 3, déplace le galet 14 perpendiculairement à la ou aux palles 2. Le galet 14 est lié en rotation à la tringle 15 (figures 11 à13). Cette dernière va tirer dans le sens de déplacement du galet, une tringle transversale 16, elle même liée à deux tringles longitudinales 17. Des tiges d'un diamètre de 10 mm sont fixées dans ces deux tringles 17. Ancrées sur l'axe longitudinal des tringles 17, ces tiges sont distantes de 110 mm, Elles sont positionnées dans des trous percés dans les parties externes de la ou des palles 2. Les trous sont d'une forme spécifique permettant, à la fois le déplacement longitudinal des tringles et l'ouverture par rotation de la ou des palles d'un angle maximal de cent degrés.

Pour fermer la plaque, il suffit de relâcher la pression sur le bouton de commande 3. Un ou plusieurs ressorts 19 (figure 10), fixés d'une part sur l'axe de rotation du galet 14, et d'autre part sur le carter de protection des vérins 18, ramène la tringle 16 dans sa position initiale, et la ou les palles ferment l'accès aux égouts. Le carter de protection 18, possède en sa partie intérieure un trou permettant l'évacuation de l'air lorsque l'utilisateur appui sur la pédale de commande. Ce trou 20 évite d'avoir un effet piston. Une compression de l'air augmentant de manière importante l'effort d'ouverture. Le carter de protection possède une surface parallèle au bouton de commande.

Cette surface bloque en translation verticale le bouton 3 de façon à ce que son déplacement n'excède pas 7,3 mm.

Un carter inférieur 21 (figure 10) constitue l'armature de la plaque. Il assure lors de son montage final sur le cadre 1, la cohésion de l'ensemble. De plus, ce carter protège le mécanisme de chocs éventuels lors de la mise en place de la plaque sur la descente d'égout.

Le cadre 1 possède quatre anneaux positionnés dans les angles. Ces anneaux 22 sont au raz du cadre. Ils servent d'ancrage à ou au(x) outils utilisés par le personnel de la voirie pour la mise en place ou le retrait des plaques.

La plaque est positionnée au sol, à une hauteur adaptée à la configuration du lieu. Elle peut être directement placée dans une forme maçonnée dans le sol. Si ce dernier s'avère insuffisant en résistance, un cadre métallique peut servir de liaison entre la plaque et le sol.

En fonction des configurations possibles des descentes d'égout, un tuyau de raccordement peut être adapté.

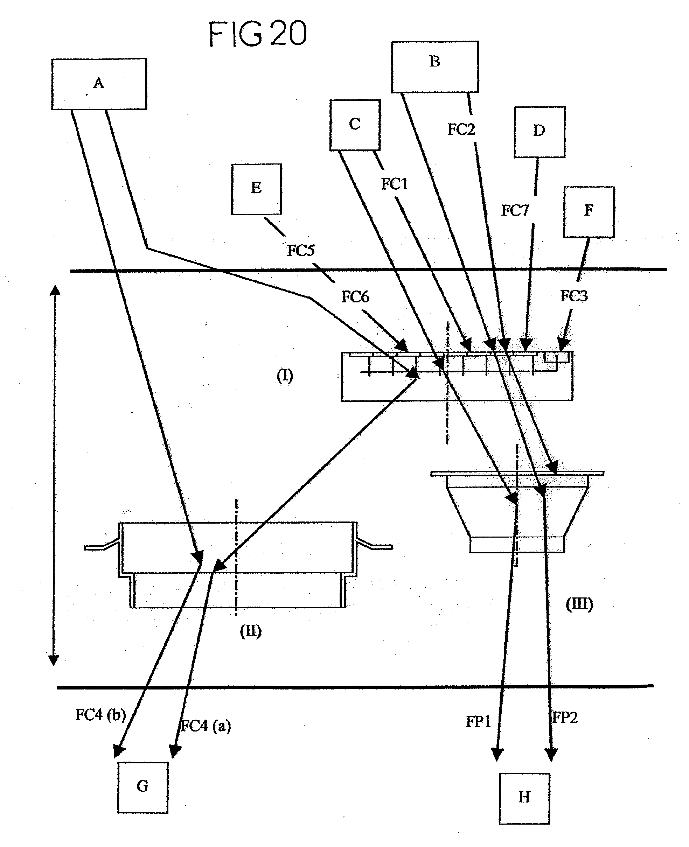

La figure 20 est une représentation schématique des flux et contraintes de la plaque.

Références des indices de la figure 20
(I): Plaque objet de la présente invention
(II) : Cadre métallique servant de lien avec le sol (si forme maçonnée insuffisante).
(III) : Tuyau de raccordement entre la plaque de la présente invention et l'égout
   A: Roue d'un véhicule
   B: Eau sous pression et détergent
   C: Déjections animales
   D: Passant
   E: Propriétaire des animaux vivant en milieu urbain
   F: Pollution, pierres etc.
   G: Terre, trottoir....
   H: Egout

Fonctions satisfaites par la plaque objet de la présente invention:
FP1: A l'ouverture du système, les déjections n'adhèrent pas, et tombent dans les égouts.
FP2: Le système permet l'évacuation immédiate des eaux (de ruissellement et sous-pression).

Contraintes supportés ou exercés par le produit
FC1: Les déjections n'adhèrent pas à la plaque, ensemble 1 de la présente invention.
FC2: Le système résiste à l'eau sous pression et aux détergents.
FC3: Les poussières, pierres, pollutions, sont sans effet sur la fonction FP1.
FC4 (a) et FC4 (b): Le système résiste au poids d'un essieu de véhicule.
FC5: La plaque d'égout se referme, dès qu'il n'y a plus volonté de la part de l'utilisateur de la laisser ouverte.
FC6: Le système ne peut pas être ouvert autrement que par le mécanisme prévu à cette effet.
FC7: Le système positionné au sol ne doit pas être la cause de la chute d'un passant).

Les animaux en milieu urbain sont naturellement attirés par les odeurs laissées par leurs congénères. Instinctivement ces animaux vont faire leurs déjections sur ou autour de la plaque.

C'est dans ce contexte que le deuxième ensemble permet au propriétaire de l'animal, ou à toute personne ayant un moyen d'accès à la canne de ramasser les déjections Un ergot 12a (figure 3) rend solidaire la canne de son support via le monnayeur 12 b (figure 4).

La canne, ensemble 2 de la présente invention, se positionne dans un support, ou réceptacle 10 (figure 4). Ce dernier est doté d'un système de nettoyage et de désinfection autonome. La canne est suffisamment grande pour éviter à l'utilisateur de se baisser, soit une hauteur de sept cent cinquante millimètres.

En sa partie supérieure la canne possède un ergot 12a permettant de la verrouiller sur le monnayeur.

En sa partie inférieure, la canne, objet de la présente invention, est constituée d'un ensemble de tiges filiformes souples ou rigides 5, guidées à travers une filière 6. Ces tiges sont entourés par le carter inférieur 7 de la canne. L'utilisateur positionne la canne au dessus de la déjection. Cette dernière est attrapée et retenue par les tiges filiformes souples ou rigides, ce qui permet de transporter la déjection vers l'ensemble 1 du dispositif ci-dessus décrit. Les tiges se retirent de la déjection après un faible effort (ressort de rappel 9 ou tout autre moyen) sur la poignée de commande 8. Les déjections tombent alors sur la plaque, ensemble 1 du dispositif objet de la présente invention, ou, si ce dernier est ouvert, directement dans les égouts.

L'ensemble 3 (figure 4) de la présente invention, est le support intégrant le système autonome de nettoyage et de désinfection de la canne ainsi qu'un distributeur d'aliments pour animaux en milieu domestique. Lorsque l'utilisateur positionne la canne dans son réceptacle 10, il peut à sa demande 13 faire tomber dans un récipient 11 prévu à cet effet une ration d'aliment. Attiré par les odeurs de ses congénères, l'animal sera d'autant plus motivé par la nourriture pour faire ses déjections au dessus de la plaque objet de la présente invention.

Les dessins annexés illustrent l'invention.

La figure 1 représente la plaque de la présente invention dans sa configuration quatre palles (vue de dessus et plaque fermée)
(1) Cadre
(2) Palles ou palettes
(3) Bouton de commande
(4) Vérins ou tout autre moyen technique

La figure 2 représente la plaque dans sa configuration 1 palle.

La figure 3 représente la canne de la présente invention.
(5) Tiges filiformes ou souples
(6) Filière
(7) Carter
(8) Poignée
(9) Ressort de rappel ou tout autre moyen de rappel
(12 a) Ergot d'accroche de la canne au monnayeur

La figure 4 représente le réceptacle ou support de la présente invention
(10) Réceptacle de la canne avec son système intégré de nettoyage et de désinfection
(11) Récipient des aliments. (12 b) Système de monnayeur
(13) Système de commande du distributeur pour aliments d'animaux domestique vivant en milieu urbain.

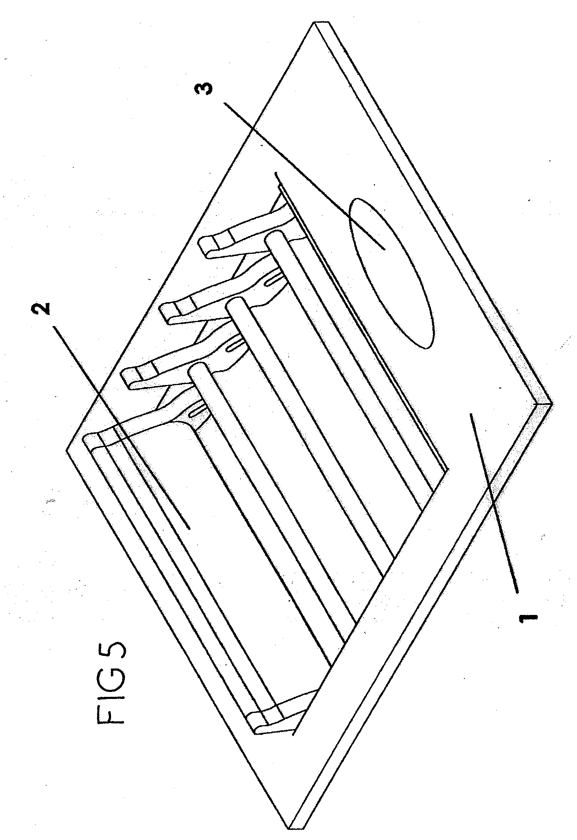

La figure 5 représente la plaque dans sa configuration 4 palles, en mode d'ouverture.

Toute les pièces pour raison de clarté ne sont pas représentées
(1) Cadre
(2) Palles ou palettes
(3) Bouton de commande

Les figures 6 à 9 représentent le bouton de commande de l'ouverture des palles

La figure 10 est une vue de dessous isométrique, de la plaque, objet de la présente invention
(1) Cadre,
(2) Bouton de commande,
(4) Vérins, ou tout autre moyen
(14) Galet,
(15) Tringle longitudinale,
(16) Tringle transversale,
(17) Deux tringles longitudinales permettant l'ouverture de palles,
(18) Carter de protection du système d'ouverture,
(19) Un ou deux ressorts de rappel pour fermeture des palles,
(20) Trou d'évacuation l'air, pour éviter le phénomène de piston,
(21) Carter inférieur

Les figures 11 à 13 sont des vues des tringles
(14) Galet
(15) tringle longitudinale,
(16) Tringle transversale,
(17) Deux tringles longitudinales permettant l'ouverture de palles,

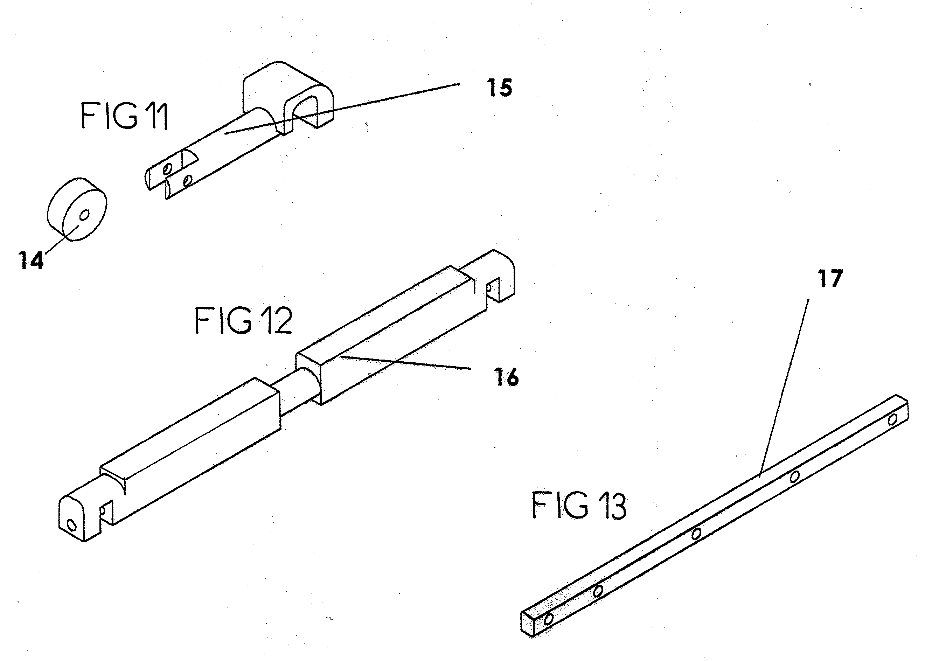

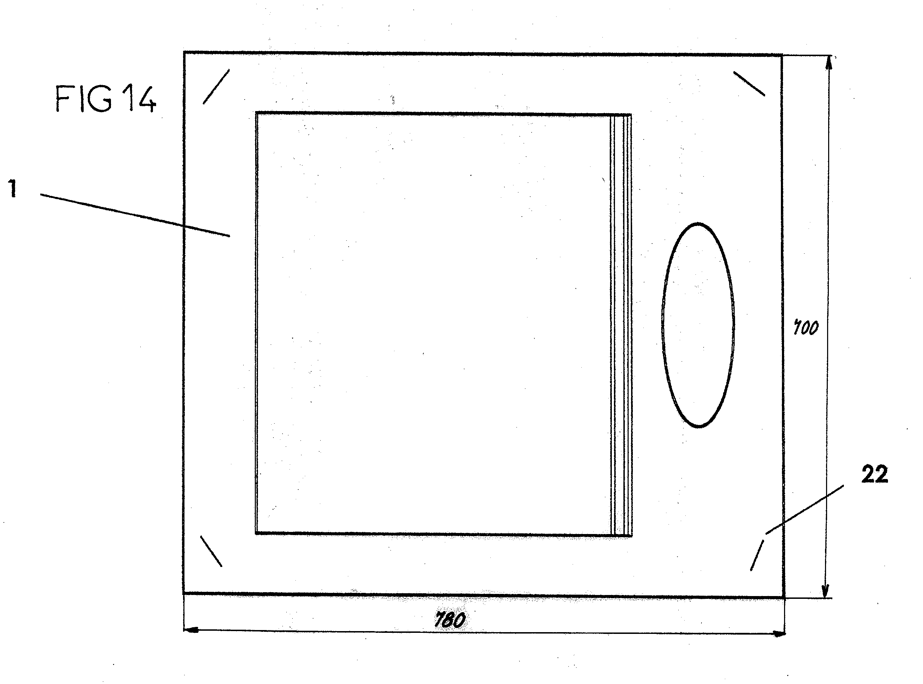

La figure 14 représente le cadre de la plaque d'égout
(1) Cadre
(22) Anneau de saisie du cadre

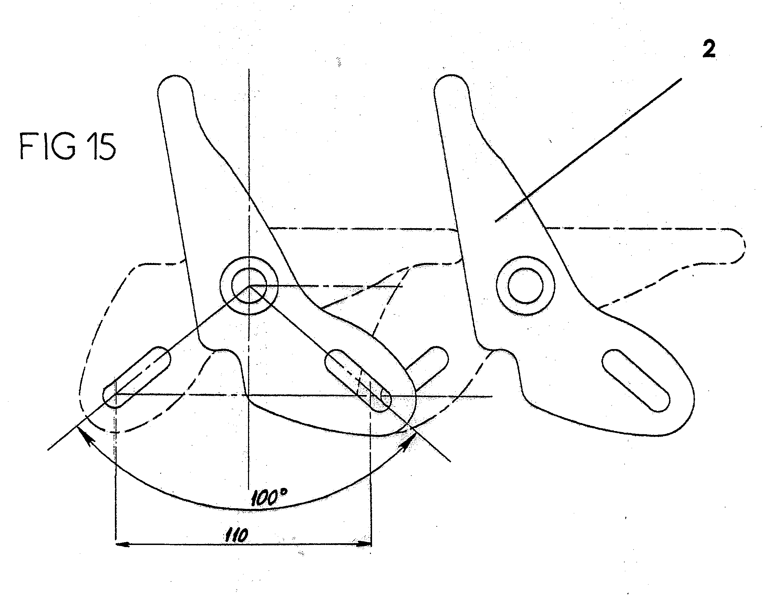

La figure 15 est une vue de profil montrant la rotation de cent dix degrés lors de l'ouverture des palles (2) et déplacement de 110 mm

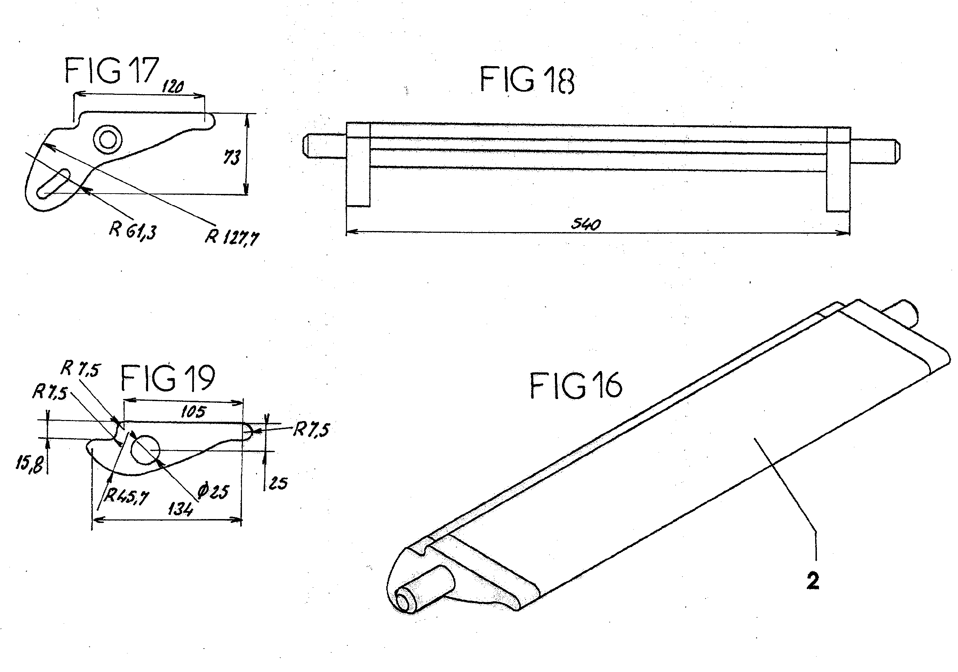

Les figures 16 à 19 représentent les palles avec vue isométrique. L'axe de rotation des palles est d'un diamètre de 25 mm d'une longueur de 620 mm et en acier inoxydable.

La figure 20 est une représentation schématique des fonctions et contraintes de la plaque, objet de la présente invention.

## Revendications

1. Dispositif pour collecter les déjections animales comprenant une plaque d'égout (1), ladite plaque comportant une ou plusieurs palles (2) formant couvercle, lesdites palles pouvant pivoter pour permettre de passer alternativement d'une position normalement fermée de la plaque dans laquelle l'accès aux égouts est condamné, vers une position ouverte dans laquelle l'accès aux égouts est libre depuis la voirie, **caractérisé en ce qu'**il comporte un mécanisme d'ouverture (3) des palles actionné par appui avec le pied.

2. Dispositif selon la revendication 1, **caractérisé en ce qu'**il comporte en outre une canne permettant la collecte des déjections animales présentes sur la voirie, vers la plaque d'égout.

3. Dispositif selon les revendications 1 ou 2 **caractérisé en ce qu'**il comporte en outre un support de canne permettant le nettoyage de celle-ci entre deux utilisations.

4. Dispositif selon la revendication 3, **caractérisé en ce que** le support comporte un distributeur d'aliments pour animaux.

5. Dispositif selon l'une quelconque des revendications 1 à 4 **caractérisé en ce que** la plaque comporte une pédale de commande (3) biseautée en sa partie inférieure sur laquelle roule un galet (14) perpendiculairement à la ou aux palles (2), ledit galet (14) étant lié en rotation à une tringle (15) pouvant tirer dans le sens de déplacement du galet, une tringle transversale (16), elle-même liée à deux tringles longitudinales (17), des tiges étant fixées dans ces deux tringles longitudinales (17), lesdites tiges étant également positionnées dans des trous percés dans les parties externes de la ou des palles (2), de manière à permettre à la fois le déplacement longitudinal des tringles et l'ouverture par rotation de la ou des palles d'un angle maximal de cent degrés.

6. Dispositif selon l'une quelconque des revendications 1 à 5, **caractérisé en ce que** les palles (2) comportent un revêtement anti-adhérent.

7. Dispositif selon l'une quelconque des revendications 1 à 6, **caractérisé en ce que** la plaque comporte un cadre (1) muni d'anneaux de traction (20) permettant aux personnes chargées de l'entretien du matériel de voirie une manipulation plus aisée.

8. Dispositif selon l'une quelconque des revendications 1 à 7, **caractérisé en ce que** la canne comporte en sa partie inférieure un ensemble de tiges filiformes souples ou rigides (5), guidées à travers une filière (6), ces tiges étant entourées par un carter inférieur (7) de la canne.
